# EUROPEAN PATENT APPLICATION

(11) **EP 2 955 682 A1**
(43) Date of publication of application: **16.12.2015**
(21) Application number: 14805150.1
(22) Date of filing: 19.05.2014
(51) Int. Cl.: G06Q 30/06

(54) **SOFTWARE RESALE METHOD, APPARATUS AND SYSTEM**

(30) Priority: 30.05.2013 CN 201310208272
(71) Applicant: Huawei Device Co., Ltd., Shenzhen, Guangdong 518129 (CN)
(72) Inventor: HUANG, Xi, Shenzhen Guangdong 518129 (CN); WU, Huangwei, Shenzhen Guangdong 518129 (CN); HUANG, Jiejing, Shenzhen Guangdong 518129 (CN)
(74) Representative: Thun, Clemens
(86) International application number: PCT/CN2014/077762
(87) International publication number: WO 2014/190856

(57) **Abstract**

Embodiments of the present invention disclose a software resale method. A first device that already obtains permission to use target software sends a resale request, to obtain a distributed resale credential; the first device sends the resale credential to a second device; and the second device purchases a target application program by using the resale credential. A problem that software cannot be resold or transferred currently is resolved, and a software developer and a distribution platform can improve a software purchase rate and activeness of the platform by using a proper business model, thereby increasing an operating income.

## Description

This application claims priority to Chinese Patent Application No. 201310208272.6, filed with the Chinese Patent Office on May 30, 2013 and entitled "SOFTWARE RESALE METHOD, APPARATUS, AND SYSTEM", which is incorporated herein by reference in its entirety.

### TECHNICAL FIELD

The present invention relates to the field of computers, and in particular, to a software resale method, apparatus, and system.

### BACKGROUND

With popularity of intelligent terminal devices, an increasing number of people begin to use terminal devices such as smart phones and tablet computers. These intelligent terminal devices can provide users with abundant applications and games. These applications and games are upgraded very quickly, and a lot of new applications and games are produced every day. Currently, a manner of distributing applications mainly uses a mode in which an application distribution platform cooperates and shares revenue with an application developer, that is, for a charging application, a developer submits a charging application to an application distributor, and after approving the submitted application, the application distributor releases the application to a software resale apparatus on an application distribution platform, for example, Google Play, App Store, and Market Place. For each sold application, the distributor and the developer share revenue in a ratio. After a user A purchases an application, a server of the application distribution platform grants a terminal device of the user A corresponding authorization or permission, so that the purchased application can be installed and used in the terminal device of the user A. However, if the user A gives a copy of the purchased application to another user B who is unauthorized, the application cannot be normally installed or used in a terminal device of the user B, and the user B must pay for the application at an original price of the application to acquire permission to use the application.

### SUMMARY

A technical problem to be resolved by embodiments of the present invention is to provide a software resale method, which can resolve a problem in the prior art that software cannot be transferred.

To resolve the foregoing technical problem, a first aspect of the present invention provides a software resale method, including:
receiving a resale request for reselling target software that is sent by a first device;
determining, according to the resale request, whether the target software is resold, and if yes, generating a resale credential and sending the resale credential to the first device, so that the first device sends the resale credential to a second device; and
receiving the resale credential sent by the second device, verifying whether the resale credential is valid, and if yes, transferring to the second device permission of the first device to use the target software.

In a first possible implementation manner, before the step of receiving a resale request for reselling target software that is sent by a first device, the method further includes:
receiving a purchase request for purchasing the target software that is sent by the first device;
after the purchase request is responded to and after the first device successfully purchases the target software, generating a first purchase credential according to description information of the target software, where the description information includes user information of the first device, an identity of the target software, and a resale permission identifier used to indicate whether the target software can be resold; and
signing the first purchase credential by using a predetermined signature algorithm, and sending the signed first purchase credential to the first device, so that the first device obtains the permission to use the target application program by using the first purchase credential.

With reference to the first possible implementation manner of the first aspect, in a second possible implementation manner, the resale request includes the description information of the target software, and the step of determining, according to the resale request, whether the target software is resold includes:
extracting the description information of the target software in the resale request; and
determining, according to the resale permission identifier in the description information, whether the target software is resold.

With reference to the second possible implementation manner of the first aspect, in a third possible implementation manner, the step of generating a resale credential and sending the resale credential to the first device includes:
signing the resale credential by using a preset digital certificate and a preset signature algorithm, and sending the signed resale credential to the first device.

With reference to the third possible implementation manner of the first aspect, in a fourth possible implementation manner, the step of verifying whether the resale credential is valid includes:
verifying whether a signature in the resale credential is valid, and if yes, determining that the resale credential is valid; otherwise, determining that the resale credential is invalid.

With reference to the first aspect and any one of the first aspect to the fourth possible implementation manner of the first aspect, in a fifth possible implementation manner, the step of transferring to the second device permission of the first device to use the target software includes:
sending an instruction for revoking the permission to use the target software to the first device, so that the first device revokes the permission to use the target software; and
generating a second purchase credential according to user information of the second device and identification information of the target software, and sending the second purchase credential to the second device, so that the second device obtains the permission to use the target software by using the second purchase credential.

A second aspect of the present invention provides a software resale method, where generating a first purchase credential according to description information of target software after a first device successfully purchases the target software, and sending the first purchase credential to the first device, so that the first device generates a resale credential according to the first purchase credential and identification information of a second device, and sends the resale credential to the second device, where the description information includes user information of the first device and an identity of the target software; and
receiving the resale credential sent by the second device, verifying whether the resale credential is valid, and if yes, transferring to the second device permission of the first device to use the target software.

In a first possible implementation manner, the step of generating a purchase credential according to description information of target software after a first device successfully purchases the target software, and sending the purchase credential to the first device includes:
receiving a purchase request for purchasing the target software that is sent by the first device;
after the purchase request is responded to and after the first device successfully purchases the target software, generating the first purchase credential according to the description information of the target software, where the description information includes the user information of the first device, the identity of the target software, and a resale permission identifier used to indicate whether the target software can be resold; and
signing the first purchase credential by using a predetermined signature algorithm, and sending the signed first purchase credential to the first device, so that the first device obtains the permission to use the target application program by using the first purchase credential.

With reference to the second aspect or the first possible implementation manner of the second aspect, in a second possible implementation manner, the step of transferring to the second device permission of the first device to use the target software includes:
generating a second purchase credential according to the resale credential and sending the second purchase credential to the second device, so that the second device obtains the permission to use the target application program by using the second purchase credential; and
updating information about the number of times of resale in the description information of the target software, updating the first purchase credential of the first device, and sending the updated first purchase credential to the first device.

A third aspect of the present invention provides a software resale apparatus, including:
a resale request receiving module, configured to receive a resale request for reselling target software that is sent by a first device, where the first device has permission to use the target software;
a resale credential sending module, configured to determine, according to the resale request, whether the target software is resold, and if yes, generate a resale credential and send the resale credential to the first device, so that the first device sends the resale credential to a second device; and
a usage permission updating module, configured to receive the resale credential sent by the second device, verify whether the resale credential is valid, and if yes, transfer to the second device the permission to use the target software.

In a first possible implementation manner, the apparatus further includes:
a purchase request receiving module, configured to receive a purchase request for purchasing the target software that is sent by the first device;
a purchase credential generating module, configured to: after the purchase request is responded to and after the first device successfully purchases the target software, generate a first purchase credential according to description information of the target software, where the description information includes user information of the first device, an identity of the target software, and a resale permission identifier used to indicate whether the target software can be resold; and
a purchase credential sending module, configured to: sign the first purchase credential by using a predetermined signature algorithm, and send the signed first purchase credential to the first device, so that the first device obtains the permission to use the target application program by using the first purchase credential.

With reference to the first possible implementation manner of the third aspect, in a second possible implementation manner, the resale credential sending module includes:
an information extracting unit, configured to extract the description information of the target software in the resale request; and
a resale determining unit, configured to determine, according to the resale permission identifier in the description information, whether the target software is resold.

With reference to the second possible implementation manner of the third aspect, in a third possible implementation manner, the purchase credential sending module is configured to: sign the resale credential by using a preset digital certificate and a preset signature algorithm, and send the signed resale credential to the first device.

With reference to the third possible implementation manner of the third aspect, in a fourth possible implementation manner, the usage permission updating module is configured to verify whether a signature in the resale credential is valid, and if yes, determine that the resale credential is valid; otherwise, determine that the resale credential is invalid.

With reference to the third aspect and any one of the third aspect to the fourth possible implementation manner of the third aspect, in a fifth possible implementation manner, the usage permission updating module includes:
a revocation instruction sending unit, configured to send an instruction for revoking the permission to use the target software to the first device, so that the first device revokes the permission to use the target software; and
a purchase credential sending unit, configured to generate a second purchase credential according to user information of the second device and identification information of the target software, and send the second purchase credential to the second device, so that the second device obtains the permission to use the target software by using the second purchase credential.

A fourth aspect of the present invention provides a software resale apparatus, including:
a credential sending module, configured to: after a first device successfully purchases target software, generate a first purchase credential according to description information of the target software and send the first purchase credential to the first device, so that the first device generates a resale credential according to the first purchase credential and identification information of a second device, and sends the resale credential to the second device, where the description information includes user information of the first device, an identity of the target software, and a resale permission identifier used to indicate whether the target software can be resold; and
a permission updating module, configured to receive the resale credential sent by the second device, verify whether the resale credential is valid, and if yes, transfer to the second device the permission to use the target software.

In a first possible implementation manner, the credential sending module includes:
a request receiving unit, configured to receive a purchase request for purchasing the target software that is sent by the first device;
a credential generating unit, configured to: after the purchase request is responded to and after the first device successfully purchases the target software, generate the first purchase credential according to the description information of the target software, where the description information includes the user information of the first device, the identity of the target software, and the resale permission identifier used to indicate whether the target software can be resold; and
a credential sending unit, configured to: sign the first purchase credential by using a predetermined signature algorithm, and send the signed first purchase credential to the first device, so that the first device obtains the permission to use the target application program by using the first purchase credential.

With reference to the fourth aspect or the first possible implementation manner of the fourth aspect, in a second possible implementation manner, the permission updating module includes:
a credential sending unit, configured to generate a second purchase credential according to the resale credential and send the second purchase credential to the second device, so that the second device obtains the permission to use the target application program by using the second purchase credential; and
a credential updating unit, configured to update information about the number of times of resale in the description information of the target software, update the first purchase credential of the first device, and send the updated first purchase credential to the first device.

A fifth aspect of the present invention provides a software resale system, including a first device, a second device, and either of the foregoing software resale apparatuses.

Implementing the embodiments of the present invention has the following beneficial effects:

During implementation of the embodiments of the present invention, a resale request sent by a first device that already obtains permission to use target software is received, so that a resale credential distributed by a software resale apparatus is obtained; the first device sends the resale credential to a second device; and the second device purchases a target application program by using the resale credential. A problem that software cannot be resold or transferred currently is resolved, and a software developer and a distribution platform can improve a software purchase rate and activeness of the platform by using a proper business model, thereby increasing an operating income.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a software resale method according to a first embodiment of the present invention;
FIG. 2A and FIG. 2B are a schematic flowchart of a software resale method according to a second embodiment of the present invention;
FIG. 3 is a schematic structural diagram of a software resale apparatus according to a first embodiment of the present invention;
FIG. 4 is a schematic structural diagram of a software resale apparatus according to a second embodiment of the present invention;
FIG. 5 is a schematic structural diagram of a resale credential sending module in FIG. 4;
FIG. 6 is a schematic structural diagram of a usage permission updating module in FIG. 4;
FIG. 7 is a schematic structural diagram of a software resale apparatus according to a third embodiment of the present invention;
FIG. 8 is a schematic flowchart of a software resale method according to a third embodiment of the present invention;
FIG. 9 is a schematic flowchart of a software resale method according to a fourth embodiment of the present invention;
FIG. 10 is a schematic structural diagram of a software resale apparatus according to a fourth embodiment of the present invention;
FIG. 11 is a schematic structural diagram of a credential sending module in FIG. 10;
FIG. 12 is a schematic structural diagram of a permission updating module in FIG. 10;
FIG. 13 is a schematic structural diagram of a software resale apparatus according to a fifth embodiment of the present invention; and
FIG. 14 is a schematic structural diagram of a software resale system according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

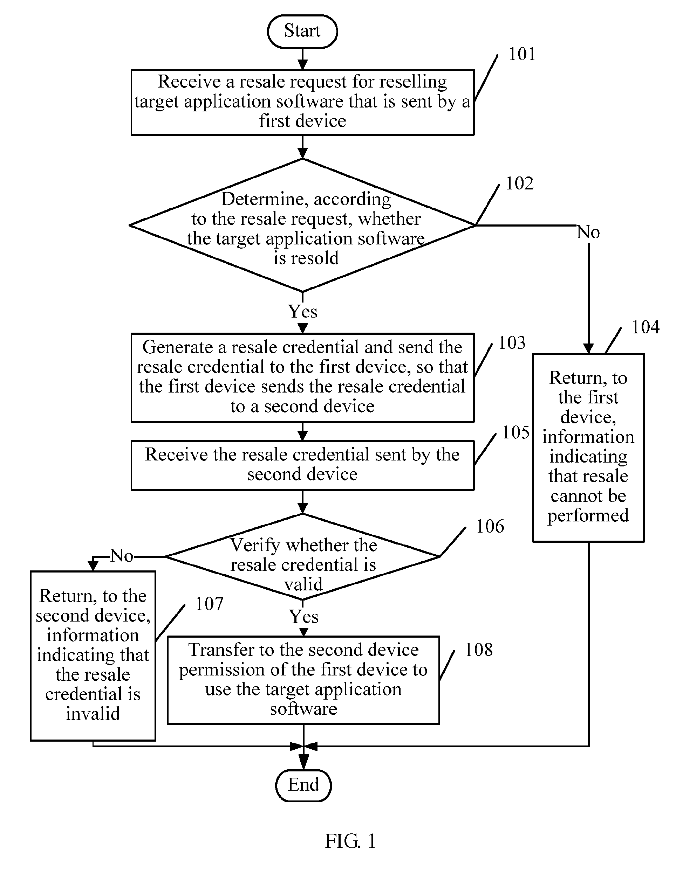

Referring to FIG. 1, FIG. 1 is a schematic flowchart of a software resale method according to a first embodiment of the present invention. The method includes:
Step 101: Receive a resale request for reselling target software that is sent by a first device.

Specifically, assuming that a user A has logged in to a server via the first device by using account information, the user A sends, to the server via the first device, the resale request for reselling the target software, and the server receives the resale request for reselling the target software that is sent by the first device, where the resale request includes user information of the first device (and the account information of the user A) and an identity of the target software.

Step 102: Determine, according to the resale request, whether the target software is resold.

Specifically, assuming that a user B has logged in to the server via a second device by using account information, the server stores an application information base of registered users, and in this case, the registered users refer to the user A and the user B, and the application information base includes description information of software purchased by the registered users, such as an identity of the software, payment status information of the software, a resale permission identifier of the software, and original price information of the software. A form of the application information base may be as follows:

```
          <application_list user_id="user_a@gmail.com">
            <application app_id="app_B">
                <state>payed</state>
                <resell>not permitted</resell>
                <price>$1,99</price>
            </application>
            <application app_id="app_C">
                <state>payed</state>
                <resell>permitted</resell>
                <price>$3.99</price>
            </application>
          </application_list>
```

where **application_list user_id** indicates account information of a registered user, such as "user_a@gmail.com" herein; **application app_id** indicates an identity of software, such as "app_B" herein; **state** indicates payment status information, for example, **payed** is used to indicate a paid state, and **unpayed** is used to indicate an unpaid state; **resell** indicates a resale permission identifier, for example, **not permitted** is used to indicate that resale is prohibited, and **permitted** is used to indicate resale can be performed; and **price** indicates an original price of the software, for example, an original price of app_B is 1.99 dollars, and an original price of app_C is 3.99 dollars.

Assuming that the first device sends, to the server, a resale request for reselling target software app_C, the server searches, according to the user information of the first device and an identity of the target software in the resale request, an application information base for payment status information and resale permission information that correspond to the target software. If in the first device, the payment status information of the target software shows paid, and the resale permission information shows that resale can be performed, it is determined that the resale request of the first device is valid, the target software can be resold, and step 103 is performed; otherwise, the target software cannot be resold, and step 104 is performed.

Step 103: Generate a resale credential and send the resale credential to the first device, so that the first device sends the resale credential to the second device.

Specifically, a resale price of the target software is determined according to a preset pricing policy, and the resale price may be determined by the user A and the user B through negotiation, or determined according to a price preset by the server, which is not limited in the present invention. Generally, the resale price of the target software is lower than an original price of the target software. The server generates the resale credential according to the resale price of the target software and the identity of the target software, and a form of the resale credential may be as follows:

```
          <application_id>app_C</application_id>
          <price>$2.99</price>
          <issue_date>2012-11-23</issue_date>
```

In the resale credential, **application_id** indicates the identity of the target software, the target software herein is app_C, **price** is the resale price of the target software, which is 2.99 dollars herein, and **issue_date** is a date on which the resale credential is distributed, which is November 23, 2012 herein.

The server distributes the generated resale credential to the first device, and the first device sends the resale credential to the second device in a wireless or wired manner. For example, the first device sends the resale credential to the second device by using Bluetooth, an email, or a wireless network, or in another manner.

Step 104: Return, to the first device, information indicating that resale cannot be performed.

Specifically, if a result of determining by the server according to step 103 is no, the server returns, to the first device, the information indicating that the target software cannot be resold.

Step 105: Receive the resale credential sent by the second device.

Step 106: Verify whether the resale credential is valid.

Specifically, the server compares the received resale credential with a resale credential stored by the server, and if they are consistent, the resale credential is valid, and step 108 is performed; if they are inconsistent, the resale credential is invalid, and step 107 is performed.

Step 107: Return, to the second device, information indicating that the resale credential is invalid.

Specifically, if a result of determining by the server according to step 106 is no, the server returns, to the second device, the information indicating that the resale credential is invalid.

Step 108: Transfer to the second device permission of the first device to use the target software.

Specifically, when the result of determining by the server according to step 106 is yes, a user that requests logging in to the second device pays an amount indicated by the resale price of the target software to a user that logs in to the first device. After determining that the payment is completed, the server sends, to the first device, a revocation instruction for revoking the target software, modifies, in the application information base, payment status information of the target software corresponding to the user A that logs in via the first device to unpaid, and modifies a payment state of the target software of the user B that logs in via the second device to paid, so that the permission is transferred from the first device to the second device.

During implementation of this embodiment of the present invention, a first device that already obtains permission to use target software sends a resale request to a server, to obtain a resale credential distributed by the server; the first device sends the resale credential to a second device; and the second device purchases a target application program by using the resale credential. A problem that software cannot be resold or transferred currently is resolved, and a software developer and a distribution platform can improve a software purchase rate and activeness of the platform by using a proper business model, thereby increasing an operating income.

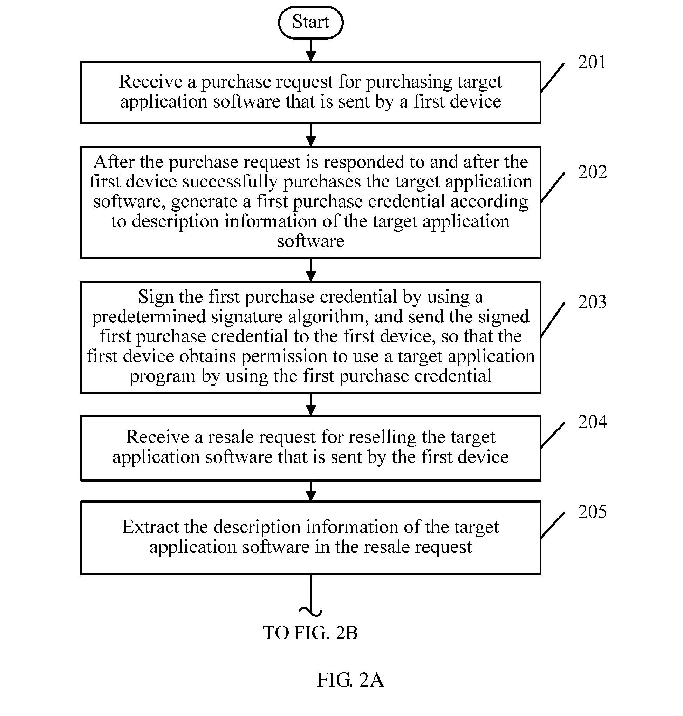

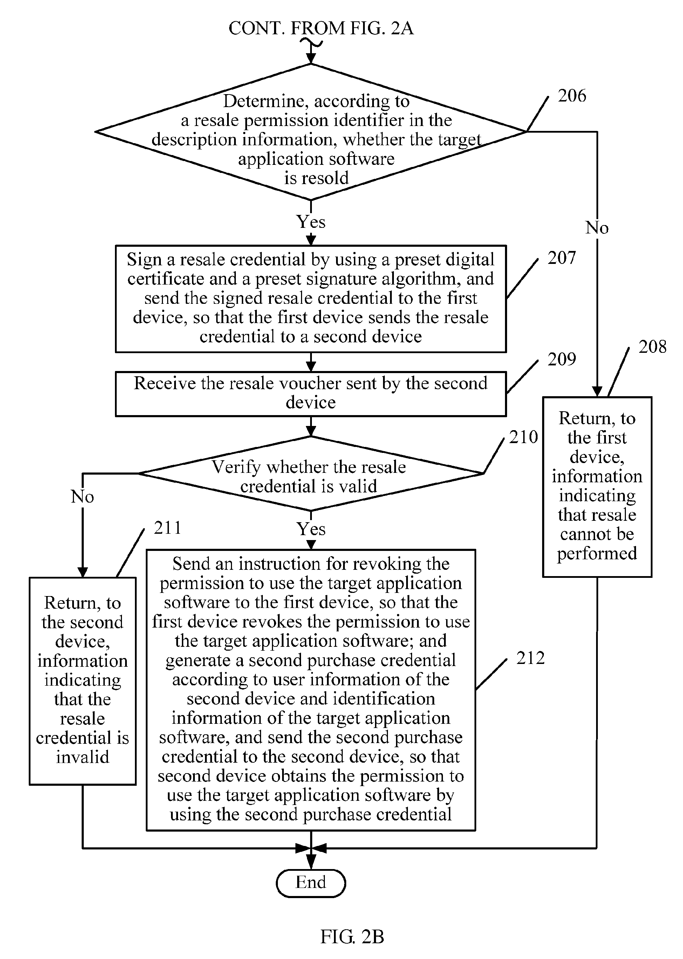

Referring to FIG. 2A and FIG. 2B, FIG. 2A and FIG. 2B are a schematic flowchart of a software resale method according to a second embodiment of the present invention. The method includes:

Step 201: Receive a purchase request sent by a first device.

Specifically, assuming that a user A has logged in to a server via the first device by using account information, the user A sends, to the server via the first device, the purchase request for purchasing target software.

Step 202: After the purchase request is responded to and after the first device successfully purchases the target software, generate a first purchase credential according to description information of the target software.

Specifically, the first purchase credential is generated according to the description information of the target software, where the description information includes user information of the first device, an identity of the target software, and a resale permission identifier used to indicate whether the target software can be resold, and a form of the first purchase credential may be as follows:

```
          <user_id>user_a@gmail.com</user_id>
          <app_id>app_c</app_id>
          <allow_resell>yes</allow_resell>
          <state>payed</state>;
```

In the first purchase credential, **user_id** indicates user information of the user A that logs in to the first device; **app_id** indicates an identity of purchased target software; **allow_resell** indicates a resale permission identifier indicating whether the target software can be resold, for example, yes indicates that the target software can be resold, and no indicates that the target software is prohibited from being resold; and **state** indicates payment status information, for example, **payed** indicates that target software is already paid, that is, the first device already obtains permission to use the target software, and **unpayed** indicates an unpaid state, that is, the first device does not obtain the permission to use the target software.

Step 203: Sign the first purchase credential by using a predetermined signature algorithm, and send the signed first purchase credential to the first device.

Specifically, the server signs the first purchase credential by using the predetermined signature algorithm, and sends the signed first purchase credential to the first device, so that the first device obtains permission to use a target application program by using the first purchase credential.

Step 204: Receive a resale request for reselling the target software that is sent by the first device.

Specifically, the resale request includes the description information of the target software, where the description information includes the user information of the first device, the identity of the target software, and the resale permission identifier used to indicate whether the target software can be resold.

Step 205: Extract the description information in the resale request.

Step 206: Determine, according to the resale permission identifier in the description information, whether the target software is resold.

Specifically, for example, for the description information in step 202, if a resale permission identifier **resell** shows **yes,** it indicates that the target software can be resold, and step 207 is performed; if the resale permission identifier **resell** shows **no,** it indicates that the target software is prohibited from being resold, and step 208 is performed.

Step 207: Sign a resale credential by using a preset digital certificate and a preset signature algorithm, and send the signed resale credential to the first device, so that the first device sends the resale credential to a second device.

Specifically, a resale price of the target software is determined according to a preset pricing policy, and the resale price may be determined by the user A and a user B through negotiation, or determined according to a price preset by the server, which is not limited in the present invention. Generally, the resale price of the target software is lower than an original price of the target software. The server generates the resale credential according to the resale price of the target software and the identity of the target software, and a form of the resale credential may be as follows:

```
          <application_id>app_C</application_id>
          <price>$2.99</price>
          <issue_date>2012-11-23</issue_date>
```

In the resale credential, **application_id** indicates the identity of the target software, the target software herein is app_C, **price** is the resale price of the target software, which is 2.99 dollars herein, and **issue_date** is a date on which the resale credential is distributed, which is November 23, 2012 herein.

The server signs the generated resale credential by using the preset digital certificate and the preset signature algorithm, and distributes the signed resale credential to the first device, so that the first device sends the resale credential to the second device.

Step 208: Return, to the first device, information indicating that resale cannot be performed.

Specifically, if a result of determining by the server according to step 206 is no, the server returns, to the first device, the information indicating that the target software cannot be resold.

Step 209: Receive the resale credential sent by the second device.

Specifically, assuming that the user B has logged in to the server via the first device by using account information, the user B sends, via the second device, the resale credential distributed by the first device.

Step 210: Verify whether the resale credential is valid.

Specifically, the server verifies validity of a signature of the resale credential by using a digital certificate and a signature algorithm that are the same as those in step 207, and if it is verified that the signature is valid, it is determined that the resale credential is valid, and step 212 is performed; otherwise, it is determined that the resale credential is invalid, and step 211 is performed.

Step 211: Return, to the second device, information indicating that the resale credential is invalid.

Specifically, if a result of determining by the server according to step 210 is no, the server returns, to the second device, the information indicating that the resale credential is invalid.

Step 212: Send an instruction for revoking the permission to use the target software to the first device, so that the first device revokes the permission to use the target software; and the server generates a second purchase credential according to user information of the second device and identification information of the target software, and sends the second purchase credential to the second device, so that second device obtains the permission to use the target software by using the second purchase credential.

During implementation of this embodiment of the present invention, a first device that already obtains permission to use target software sends a resale request to a server, to obtain a resale credential distributed by the server; the first device sends the resale credential to a second device; and the second device purchases a target application program by using the resale credential. A problem that software cannot be resold or transferred currently is resolved, and a software developer and a distribution platform can improve a software purchase rate and activeness of the platform by using a proper business model, thereby increasing an operating income.

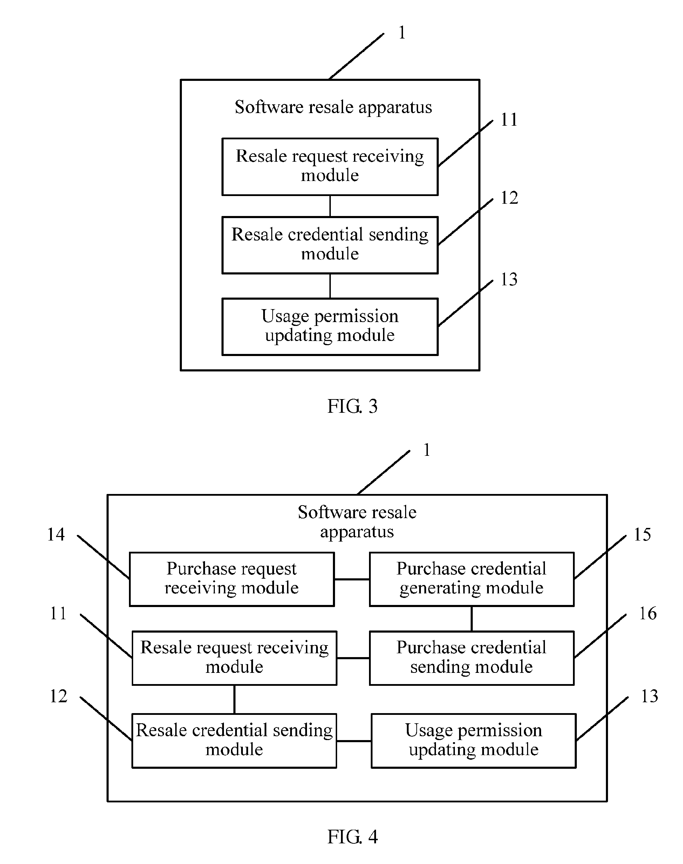

Referring to FIG. 3, FIG. 3 is a schematic structural diagram of a software resale apparatus according to a first embodiment of the present invention. The software resale apparatus 1 includes:
a resale request receiving module 11, configured to receive a resale request for reselling target software that is sent by a first device, where the first device has permission to use the target software.

Specifically, assuming that a user A has logged in to a server via the first device by using account information, the user A sends, to the resale request receiving module 11 via the first device, the resale request for reselling the target software, and the resale request receiving module 11 receives the resale request for reselling the target software that is sent by the first device, where the resale request includes user information of the first device (and the account information of the user A) and an identity of the target software.

A resale credential sending module 12 is configured to determine, according to the resale request, whether the target software is resold, and if yes, generate a resale credential and send the resale credential to the first device, so that the first device sends the resale credential to a second device.

A usage permission updating module 13, configured to receive the resale credential sent by the second device, verify whether the resale credential is valid, and if yes, transfer to the second device the permission to use the target software.

During implementation of this embodiment of the present invention, a first device that already obtains permission to use target software sends a resale request to a server, to obtain a resale credential distributed by the server; the first device sends the resale credential to a second device; and the second device purchases a target application program by using the resale credential. A problem that software cannot be resold or transferred currently is resolved, and a software developer and a distribution platform can improve a software purchase rate and activeness of the platform by using a proper business model, thereby increasing an operating income.

Referring to FIG. 4 to FIG. 6, FIG. 4 to FIG. 6 are schematic structural diagrams of a software resale apparatus according to a second embodiment of the present invention. In addition to a resale request receiving module 11, a resale request receiving module 12, and a usage permission updating module 13, the software resale apparatus 1 further includes:
a purchase request receiving module 14, configured to receive a purchase request for purchasing target software that is sent by a first device;
a purchase credential generating module 15, configured to: after the purchase request is responded to and after the first device successfully purchases the target software, generate a first purchase credential according to description information of the target software, where the description information includes user information of the first device, an identity of the target software, and a resale permission identifier used to indicate whether the target software can be resold; and
a purchase credential sending module 16, configured to: sign the first purchase credential by using a predetermined signature algorithm, and send the signed first purchase credential to the first device, so that the first device obtains permission to use the target application program by using the first purchase credential.

The resale credential sending 12 module includes:
an information extracting unit 121, configured to extract the description information of the target software in the resale request; and
a resale determining unit 122, configured to determine, according to the resale permission identifier in the description information, whether the target software is resold.

The usage permission updating module 13 includes:
a revocation instruction sending unit 131, configured to send an instruction for revoking the permission to use the target software to the first device, so that the first device revokes the permission to use the target software; and
a purchase credential sending unit 132, configured to generate a second purchase credential according to user information of the second device and identification information of the target software, and send the second purchase credential to the second device, so that the second device obtains the permission to use the target software by using the second purchase credential.

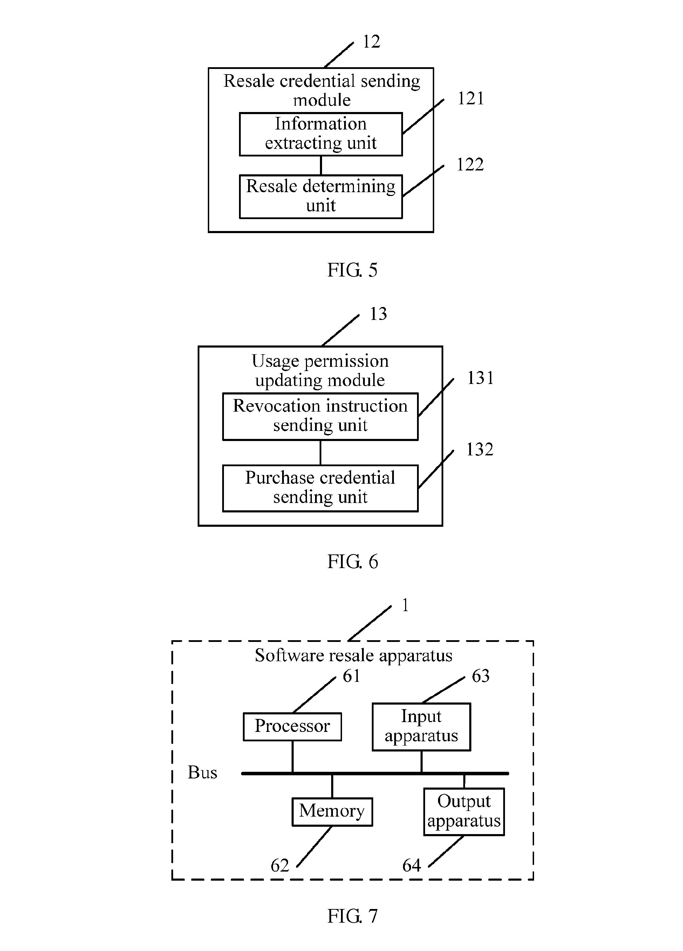

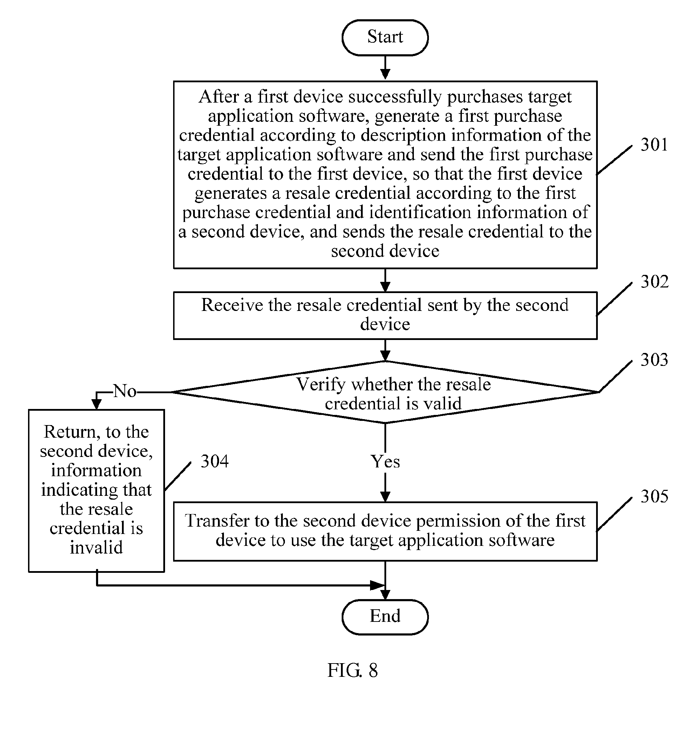

Referring to FIG. 7, FIG. 7 is a schematic structural diagram of a software resale apparatus according to a third embodiment of the present invention. The software resale apparatus 1 includes a processor 61, a memory 62, an input apparatus 63, and an output apparatus 64. There may be one or more processors 61 in the software resale apparatus 1, and in FIG. 8, that there is one processor is used as an example. In some embodiments of the present invention, the processor 61, the memory 62, the input apparatus 63, and the output apparatus 64 may be connected by using a bus or in other manners, and in FIG. 8, that the processor 61, the memory 62, the input apparatus 63, and the output apparatus 64 are connected by using a bus is used as an example.

The memory 62 stores a set of program code, and the processor 61 is configured to invoke the program code stored in the memory 62 to perform the following operations:
receiving a resale request for reselling target software that is sent by a first device;
determining, according to the resale request, whether the target software is resold, and if yes, generating a resale credential and sending the resale credential to the first device, so that the first device sends the resale credential to a second device; and
receiving the resale credential sent by the second device, verifying whether the resale credential is valid, and if yes, transferring to the second device permission of the first device to use the target software.

Preferably, in some embodiments of the present invention, before the processor 61 performs the step of the receiving a resale request for reselling target software that is sent by a first device, the following is further included:
receiving a purchase request for purchasing the target software that is sent by the first device;
after the purchase request is responded to and after the first device successfully purchases the target software, generating a first purchase credential according to description information of the target software, where the description information includes user information of the first device, an identity of the target software, and a resale permission identifier used to indicate whether the target software can be resold; and
signing the first purchase credential by using a predetermined signature algorithm, and sending the signed first purchase credential to the first device, so that the first device obtains the permission to use the target application program by using the first purchase credential.

Preferably, in some embodiments of the present invention, that the processor 61 performs the step of the determining, according to the resale request, whether the target software is resold includes:
extracting the description information of the target software in the resale request; and
determining, according to the resale permission identifier in the description information, whether the target software is resold.

Preferably, in some embodiments of the present invention, that the processor 61 performs the step of the generating a resale credential and sending the resale credential to the first device includes:
signing the resale credential by using a preset digital certificate and a preset signature algorithm, and sending the signed resale credential to the first device.

Preferably, in some embodiments of the present invention, that the processor 61 performs the step of verifying whether the resale credential is valid includes:
verifying whether a signature in the resale credential is valid, and if yes, determining that the resale credential is valid; otherwise, determining that the resale credential is invalid.

Preferably, in some embodiments of the present invention, that the processor 61 performs the step of transferring to the second device permission of the first device to use the target software includes:
sending an instruction for revoking the permission to use the target software to the first device, so that the first device revokes the permission to use the target software; and
generating a second purchase credential according to user information of the second device and identification information of the target software, and sending the second purchase credential to the second device, so that the second device obtains the permission to use the target software by using the second purchase credential.

During implementation of this embodiment of the present invention, a first device that already obtains permission to use target software sends a resale request to a software resale apparatus, to obtain a resale credential distributed by the software resale apparatus; the first device sends the resale credential to a second device; and the second device purchases a target application program by using the resale credential. A problem that software cannot be resold or transferred currently is resolved, and a software developer and a distribution platform can improve a software purchase rate and activeness of the platform by using a proper business model, thereby increasing an operating income.

Referring to FIG. 8, FIG. 8 is a schematic flowchart of a software resale method according to a third embodiment of the present invention. The method includes:

Step 301: After a first device successfully purchases target software, generate a first purchase credential according to description information of the target software and send the first purchase credential to the first device, so that the first device generates a resale credential according to the first purchase credential and identification information of a second device, and sends the resale credential to the second device.

Specifically, assuming that a user A logs in to a server via the first device and the user A successfully purchases the target software via the first device, the server generates the first purchase credential according to the description information of the target software, and a form of the first purchase credential may be as follows:

```
          <user_id>user_a@gmail.com</user_id>
          <app_id>app_c</app_id>
          <resell_time>2</resell_time>
          <state>payed</state>
          <price>$3.99</price>
```

In the foregoing first purchase credential, the description information of the target software includes user information of the first device and an identity of the target software; **user_id** indicates the user information of the first device, such as user_a@gmail.com herein; **app_id** indicates an identity of software, where the software herein is app_c, it is assumed that app_c is the target software; **resell_time** is information about the number of times of resale, and herein app_c can be resold twice; **state** is payment status information, and herein **payed** indicates a paid state, which indicates that the first device already obtains permission to use the target software, and **unpayed** indicates an unpaid state, which indicates that the first device does not obtain the practical permission to use the target software; and **price>** is an original price of the software, which is 3.99 dollars herein. The server generates the first purchase credential according to the description information of the target software, and sends the first purchase credential to the first device.

The first device verifies validity of a signature in the first purchase credential, and if the signature is valid, the first device extracts **user_id,** the user information of the first device, **app_id,** a device identifier of the target software, and payment status information that are in the first purchase credential, to verify whether the user A purchases the target software app_c. The first device acquires the permission to use the target software by using the first purchase credential.

The user A negotiates with a user B for a resale price of the target software, and the user B logs in to the server via the second device by using account information. The resale credential is generated after the first device signs user information of the second device, the identity of the target software, and the payment status information of the target software by using a digital certificate distributed by the server, and a form of the resale credential may be as follows:

```
          <user_id>user_b@gmail.com</user_id>
          <app_id>app_c</app_id>
          <resell_time>0</resell_time>
          <state>unpayed</state>
          <price>$1.99</price>
```

The first device sends the resale credential to the second device by using Bluetooth, an email, or a wireless network, or in other manners.

Step 302: Receive the resale credential sent by the second device.

Step 303: Verify whether a signature in the resale credential is valid.

Specifically, the server verifies validity of the resale credential that is signed by using the digital certificate signed and issued by the server, and if the resale credential is valid, it indicates that the resale credential is valid, and step 305 is performed, and if the resale credential is invalid, it indicates that the resale credential is invalid, and step 304 is performed. Then **app_id, user_id,** and **price** in the resale credential are checked, and a second purchase credential used to activate target application program in the second is generated by signing using the digital certificate of the server, and a form of the second purchase credential is as follows:

```
          <user_id>user_b@ gmail.com</user_id>
          <app_id>app_c</app_id>
          <resell_time>0</resell_time>
          <state>payed</state>
          <price>$1.99</price>
```

Step 304: Return, to the second device, information indicating that the resale credential is invalid.

Step 305: Transfer to the second device the permission of the first device to use a target application program.

Specifically, the server sends the second purchase credential to the second device, so that the second device acquires the permission to use the target software. In addition, the server refunds money to the first device, and requests the first device to update information about the number of times of resale of the target software, and the first purchase credential of the target software in the first device is updated by sending an instruction or generating a new purchase credential.

During implementation of this embodiment of the present invention, a first device that already obtains permission to use target software sends a resale request to a server, to obtain a resale credential distributed by the server; the first device sends the resale credential to a second device; and the second device purchases a target application program by using the resale credential. A problem that software cannot be resold or transferred currently is resolved, and a software developer and a distribution platform can improve a software purchase rate and activeness of the platform by using a proper business model, thereby increasing an operating income.

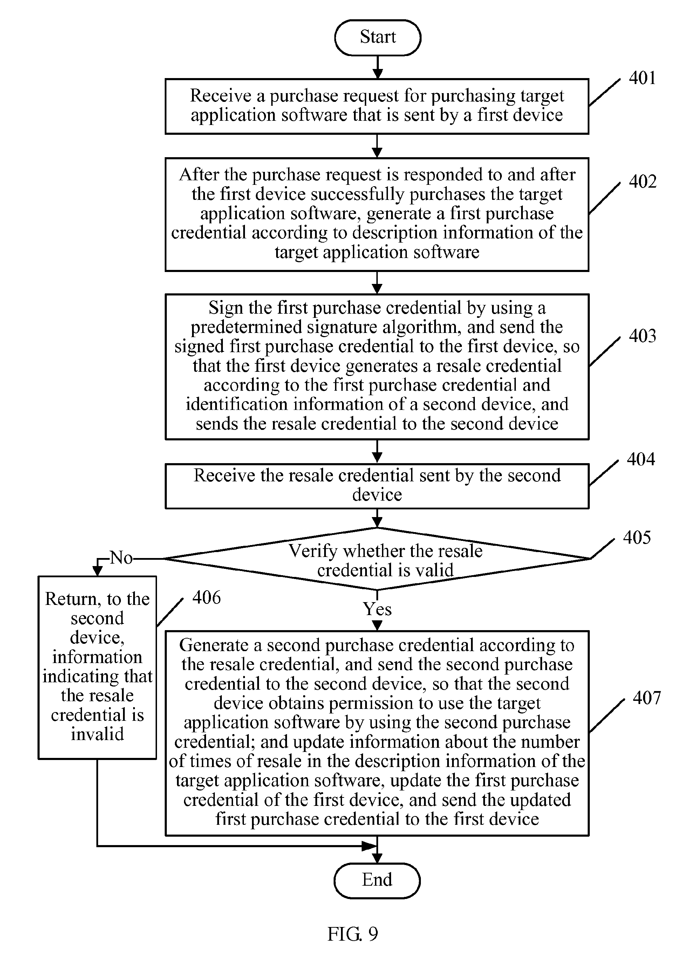

Referring to FIG. 9, FIG. 9 is a schematic flowchart of a software resale method according to a fourth embodiment of the present invention. The method includes:

Step 401: Receive a purchase request for purchasing target software that is sent by a first device.

Step 402: After the purchase request is responded to and after the first device successfully purchases the target software, generate a first purchase credential according to description information of the target software.

Step 403: Sign the first purchase credential by using a predetermined signature algorithm, and send the signed first purchase credential to the first device, so that the first device generates a resale credential according to the first purchase credential and identification information of a second device, and sends the resale credential to the second device.

Step 404: Receive the resale credential sent by the second device.

Step 405: Verify whether the resale credential is valid.

Step 406: Return, to the second device, information indicating that the resale credential is invalid.

Step 407: Generate a second purchase credential according to the resale credential, and send the second purchase credential to the second device, so that the second device obtains permission to use the target software by using the second purchase credential; and a server updates information about the number of times of resale in the description information of the target software, updates the first purchase credential of the first device, and sends the updated first purchase credential to the first device.

During implementation of this embodiment of the present invention, a first device that already obtains permission to use target software sends a resale request to a server, to obtain a resale credential distributed by the server; the first device sends the resale credential to a second device; and the second device purchases a target application program by using the resale credential. A problem that software cannot be resold or transferred currently is resolved, and a software developer and a distribution platform can improve a software purchase rate and activeness of the platform by using a proper business model, thereby increasing an operating income.

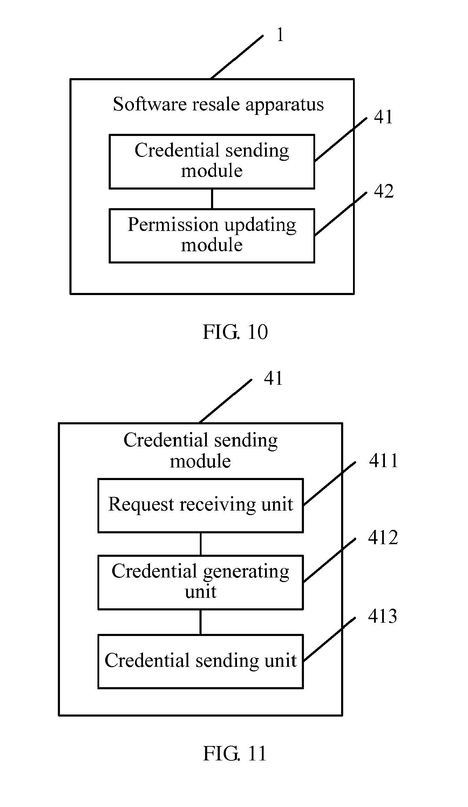

Referring to FIG. 10 to FIG. 12, FIG. 10 to FIG. 12 are schematic structural diagrams of a software resale apparatus according to a fourth embodiment of the present invention. The software resale apparatus 1 includes:
a credential sending module 41, configured to: after a first device successfully purchases target software, generate a first purchase credential according to description information of the target software and send the first purchase credential to the first device, so that the first device generates a resale credential according to the first purchase credential and identification information of a second device, and sends the resale credential to the second device, where the description information includes user information of the first device, an identity of the target software, and a resale permission identifier used to indicate whether the target software can be resold; and
a permission updating module 42, configured to receive the resale credential sent by the second device, verify whether the resale credential is valid, and if yes, transfer to the second device permission of the first device to use the target software.

Preferably, the credential sending module 41 includes:
a request receiving unit 411, configured to receive a purchase request for purchasing the target software that is sent by the first device;
a credential generating unit 412, configured to: after the purchase request is responded to and after the first device successfully purchases the target software, generate the first purchase credential according to the description information of the target software, where the description information includes the user information of the first device, the identity of the target software, and the resale permission identifier used to indicate whether the target software can be resold; and
a credential sending unit, configured to: sign the first purchase credential by using a predetermined signature algorithm, and send the signed first purchase credential to the first device, so that the first device obtains the permission to use the target application program by using the first purchase credential.

Further, preferably, the permission updating module 42 includes:
a credential sending unit 421, configured to generate a second purchase credential according to the resale credential and send the second purchase credential to the second device, so that the second device obtains the permission to use the target application program by using the second purchase credential; and
a credential updating unit 422, configured to update information about the number of times of resale in the description information of the target software, update the first purchase credential of the first device, and send the updated first purchase credential to the first device.

During implementation of this embodiment of the present invention, a first device that already obtains permission to use target software sends a resale request to a software resale apparatus, to obtain a resale credential distributed by the software resale apparatus; the first device sends the resale credential to a second device; and the second device purchases a target application program by using the resale credential. A problem that software cannot be resold or transferred currently is resolved, and a software developer and a distribution platform can improve a software purchase rate and activeness of the platform by using a proper business model, thereby increasing an operating income.

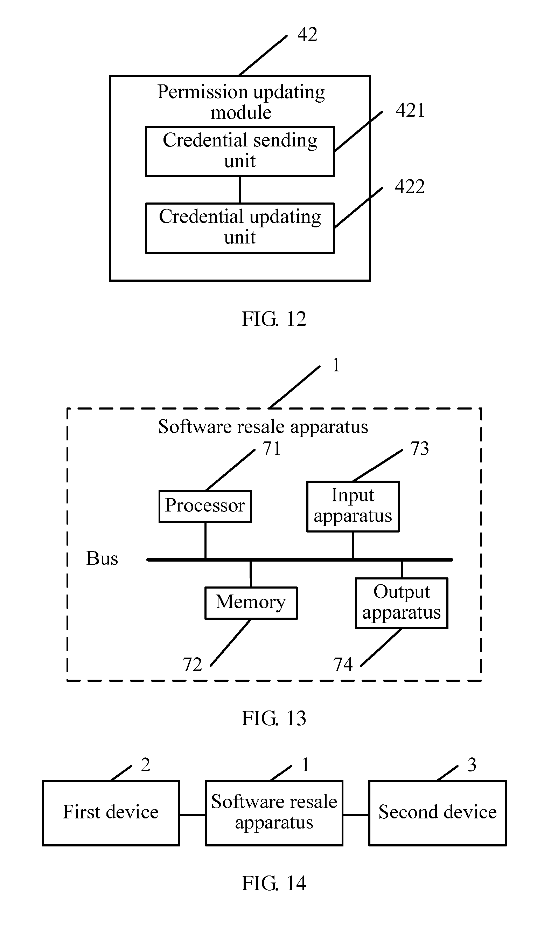

Referring to FIG. 13, FIG. 13 is a schematic structural diagram of a software resale apparatus according to a fifth embodiment of the present invention. The software resale apparatus 1 includes a processor 71, a memory 72, an input apparatus 73, and an output apparatus 74. There may be one or more processors 61 in the software resale apparatus 1, and in FIG. 13, that there is one processor is used as an example. In some embodiments of the present invention, the processor 71, the memory 72, the input apparatus 73, and the output apparatus 74 may be connected by using a bus or in other manners, and in FIG. 13, that the processor 71, the memory 72, the input apparatus 73, and the output apparatus 74 are connected by using a bus is used as an example.

The memory 62 stores a set of program code, and the processor 61 is configured to invoke the program code stored in the memory 62 to perform the following operations:
generating a first purchase credential according to description information of the target software after a first device successfully purchases target software, and sending the first purchase credential to the first device, so that the first device generates a resale credential according to the first purchase credential and identification information of a second device, and sends the resale credential to the second device, where the description information includes user information of the first device and an identity of the target software; and
receiving the resale credential sent by the second device, verifying whether the resale credential is valid, and if yes, transferring to the second device permission of the first device to use the target software.

Preferably, in some embodiments of the present invention, that the processor 71 performs the step of the generating a purchase credential according to description information of the target software after a first device successfully purchases target software, and sending the purchase credential to the first device includes:
receiving a purchase request for purchasing the target software that is sent by the first device;
after the purchase request is responded to and after the first device successfully purchases the target software, generating the first purchase credential according to the description information of the target software, where the description information includes the user information of the first device, the identity of the target software, and a resale permission identifier used to indicate whether the target software can be resold; and
signing the first purchase credential by using a predetermined signature algorithm, and sending the signed first purchase credential to the first device, so that the first device obtains the permission to use the target application program by using the first purchase credential.

Preferably, in some embodiments of the present invention, that the processor 71 performs the step of the transferring to the second device permission of the first device to use the target software includes:
generating a second purchase credential according to the resale credential and sending the second purchase credential to the second device, so that the second device obtains the permission to use the target application program by using the second purchase credential; and
updating information about the number of times of resale in the description information of the target software, updating the first purchase credential of the first device, and sending the updated first purchase credential to the first device.

During implementation of this embodiment of the present invention, a first device that already obtains permission to use target software sends a resale request to a software resale apparatus, to obtain a resale credential distributed by the software resale apparatus; the first device sends the resale credential to a second device; and the second device purchases a target application program by using the resale credential. A problem that software cannot be resold or transferred currently is resolved, and a software developer and a distribution platform can improve a software purchase rate and activeness of the platform by using a proper business model, thereby increasing an operating income.

Referring to FIG. 14, FIG. 14 is a schematic structural diagram of a software resale system according to an embodiment of the present invention, including a first device 2, a software resale apparatus 1, and a second device 3. A working process is as follows:
the software resale apparatus 1 receives a resale request for reselling target software that is sent by the first device 2; the software resale apparatus 1 determines, according to the resale request, whether the target software is resold, and if yes, the software resale apparatus generates a resale credential and sends the resale credential to the first device 2, so that the first device 2 sends the resale credential to the second device 3; and the software resale apparatus 1 receives the resale credential sent by the second device 3, and verifies whether the resale credential is valid, and if yes, transfers to the second device 3 permission of the first device 2 to use the target software.

An interaction process among the first device 2, the software resale apparatus 1, and the second device may further be:
after the first device 2 successfully purchases the target software, the software resale apparatus 1 generates a first purchase credential according to description information of the target software, and sends the first purchase credential to the first device 2, so that the first device 2 generates the resale credential according to the first purchase credential and identification information of the second device 3, and sends the resale credential to the second device 3, where the description information includes user information of the first device 2 and an identity of the target software; and the software resale apparatus 1 receives the resale credential sent by the second device 3, verifies whether the resale credential is valid, and if yes, transfers to the second device 3 the permission of the first device 2 to use the target software.

During implementation of this embodiment of the present invention, a first device that already obtains permission to use target software sends a resale request to a software resale apparatus, to obtain a resale credential distributed by the software resale apparatus; the first device sends the resale credential to a second device; and the second device purchases a target application program by using the resale credential. A problem that software cannot be resold or transferred currently is resolved, and a software developer and a distribution platform can improve a software purchase rate and activeness of the platform by using a proper business model, thereby increasing an operating income.

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The storage medium may include: a magnetic disk, an optical disc, a read-only memory (Read-Only Memory, ROM), or a random access memory (Random Access Memory, RAM).

What is disclosed above is merely exemplary embodiments of the present invention, and certainly is not intended to limit the protection scope of the present invention. A person of ordinary skill in the art may understand that all or some of processes that implement the foregoing embodiments and equivalent modifications made in accordance with the claims of the present invention shall fall within the scope of the present invention.

## Claims

1. A software resale method, comprising:
receiving a resale request for reselling target software that is sent by a first device;
determining, according to the resale request, whether the target software is resold, and if yes, generating a resale credential and sending the resale credential to the first device, so that the first device sends the resale credential to a second device; and
receiving the resale credential sent by the second device, verifying whether the resale credential is valid, and if yes, transferring to the second device permission of the first device to use the target software.

2. The resale method according to claim 1, wherein before the step of receiving a resale request for reselling target software that is sent by a first device, the method further comprises:
receiving a purchase request for purchasing the target software that is sent by the first device;
after the purchase request is responded to and after the first device successfully purchases the target software, generating a first purchase credential according to description information of the target software, wherein the description information comprises user information of the first device, an identity of the target software, and a resale permission identifier used to indicate whether the target software can be resold; and
signing the first purchase credential by using a predetermined signature algorithm, and sending the signed first purchase credential to the first device, so that the first device obtains the permission to use the target application program by using the first purchase credential.

3. The resale method according to claim 2, wherein the resale request comprises the description information of the target software, and the step of determining, according to the resale request, whether the target software is resold comprises:
extracting the description information of the target software in the resale request; and
determining, according to the resale permission identifier in the description information, whether the target software is resold.

4. The resale method according to claim 3, wherein the step of generating a resale credential and sending the resale credential to the first device comprises:
signing the resale credential by using a preset digital certificate and a preset signature algorithm, and sending the signed resale credential to the first device.

5. The resale method according to claim 4, wherein the step of verifying whether the resale credential is valid comprises:
verifying whether a signature in the resale credential is valid, and if yes, determining that the resale credential is valid; otherwise, determining that the resale credential is invalid.

6. The resale method according to any one of claims 1 to 5, wherein the step of transferring to the second device permission of the first device to use the target software comprises:
sending an instruction for revoking the permission to use the target software to the first device, so that the first device revokes the permission to use the target software; and
generating a second purchase credential according to user information of the second device and identification information of the target software, and sending the second purchase credential to the second device, so that the second device obtains the permission to use the target software by using the second purchase credential.

7. A software resale method, comprising:
generating a first purchase credential according to description information of target software after a first device successfully purchases the target software, and sending the first purchase credential to the first device, so that the first device generates a resale credential according to the first purchase credential and identification information of a second device, and sends the resale credential to the second device, wherein the description information comprises user information of the first device and an identity of the target software; and
receiving the resale credential sent by the second device, verifying whether the resale credential is valid, and if yes, transferring to the second device permission of the first device to use the target software.

8. The resale method according to claim 7, wherein the step of generating a purchase credential according to description information of target software after a first device successfully purchases the target software, and sending the purchase credential to the first device comprises:
receiving a purchase request for purchasing the target software that is sent by the first device;
after the purchase request is responded to and after the first device successfully purchases the target software, generating the first purchase credential according to the description information of the target software, wherein the description information comprises the user information of the first device, the identity of the target software, and a resale permission identifier used to indicate whether the target software can be resold; and
signing the first purchase credential by using a predetermined signature algorithm, and sending the signed first purchase credential to the first device, so that the first device obtains the permission to use the target application program by using the first purchase credential.

9. The resale method according to claim 7 or 8, wherein the step of transferring to the second device permission of the first device to use the target software comprises:
generating a second purchase credential according to the resale credential and sending the second purchase credential to the second device, so that the second device obtains the permission to use the target application program by using the second purchase credential; and
updating information about the number of times of resale in the description information of the target software, updating the first purchase credential of the first device, and sending the updated first purchase credential to the first device.

10. A software resale apparatus, comprising:
a resale request receiving module, configured to receive a resale request for reselling target software that is sent by a first device, wherein the first device has permission to use the target software;
a resale credential sending module, configured to determine, according to the resale request, whether the target software is resold, and if yes, generate a resale credential and send the resale credential to the first device, so that the first device sends the resale credential to a second device; and
a usage permission updating module, configured to receive the resale credential sent by the second device, verify whether the resale credential is valid, and if yes, transfer to the second device the permission to use the target software.

11. The software resale apparatus according to claim 10, further comprising:
a purchase request receiving module, configured to receive a purchase request for purchasing the target software that is sent by the first device;
a purchase credential generating module, configured to: after the purchase request is responded to and after the first device successfully purchases the target software, generate a first purchase credential according to description information of the target software, wherein the description information comprises user information of the first device, an identity of the target software, and a resale permission identifier used to indicate whether the target software can be resold; and
a purchase credential sending module, configured to: sign the first purchase credential by using a predetermined signature algorithm, and send the signed first purchase credential to the first device, so that the first device obtains the permission to use the target application program by using the first purchase credential.

12. The resale apparatus according to claim 11, wherein the resale credential sending module comprises:
an information extracting unit, configured to extract the description information of the target software in the resale request; and
a resale determining unit, configured to determine, according to the resale permission identifier in the description information, whether the target software is resold.

13. The resale method according to claim 12, wherein the purchase credential sending module is configured to: sign the resale credential by using a preset digital certificate and a preset signature algorithm, and send the signed resale credential to the first device.

14. The resale method according to claim 13, wherein the usage permission updating module is configured to verify whether a signature in the resale credential is valid, and if yes, determine that the resale credential is valid; otherwise, determine that the resale credential is invalid.

15. The resale apparatus according to any one of claims 10 to 14, wherein the usage permission updating module comprises:
a revocation instruction sending unit, configured to send an instruction for revoking the permission to use the target software to the first device, so that the first device revokes the permission to use the target software; and
a purchase credential sending unit, configured to generate a second purchase credential according to user information of the second device and identification information of the target software, and send the second purchase credential to the second device, so that the second device obtains the permission to use the target software by using the second purchase credential.

16. A software resale apparatus, comprising:
a credential sending module, configured to: after a first device successfully purchases target software, generate a first purchase credential according to description information of the target software and send the first purchase credential to the first device, so that the first device generates a resale credential according to the first purchase credential and identification information of a second device, and sends the resale credential to the second device, wherein the description information comprises user information of the first device, an identity of the target software, and a resale permission identifier used to indicate whether the target software can be resold; and
a permission updating module, configured to receive the resale credential sent by the second device, verify whether the resale credential is valid, and if yes, transfer to the second device permission to use the target software.

17. The resale apparatus according to claim 16, wherein the credential sending module comprises:
a request receiving unit, configured to receive a purchase request for purchasing the target software that is sent by the first device;
a credential generating unit, configured to: after the purchase request is responded to and after the first device successfully purchases the target software, generate the first purchase credential according to the description information of the target software, wherein the description information comprises the user information of the first device, the identity of the target software, and the resale permission identifier used to indicate whether the target software can be resold; and
a credential sending unit, configured to: sign the first purchase credential by using a predetermined signature algorithm, and send the signed first purchase credential to the first device, so that the first device obtains the permission to use the target application program by using the first purchase credential.

18. The resale apparatus according to claim 16 or 17, wherein the permission updating module comprises:
a credential sending unit, configured to generate a second purchase credential according to the resale credential and send the second purchase credential to the second device, so that the second device obtains the permission to use the target application program by using the second purchase credential; and
a credential updating unit, configured to update information about the number of times of resale in the description information of the target software, update the first purchase credential of the first device, and send the updated first purchase credential to the first device.

19. A software resale system, comprising a first device, a second device, and the software resale apparatus according to any one of claims 10 to 15; or
a first device, a second device, and the software resale apparatus according to any one of claims 16 to 18.
